# EUROPÄISCHE PATENTANMELDUNG

(11) **EP 2 395 058 A2**
(43) Veröffentlichungstag der Anmeldung: **14.12.2011**
(21) Anmeldenummer: 11003441.0
(22) Anmeldetag: 27.04.2011
(51) Int. Cl.: C09D 167/08, C08K 5/103

(54) **Wässrige Alkydharzdispersionen enthaltend Fettsäurepolyglycerinester**

(30) Priorität: 08.06.2010 DE 102010023035; 23.06.2010 DE 102010024713
(71) Anmelder: Clariant International Ltd., 4132 Muttenz (CH)
(72) Erfinder: Ahrens, Hendrik, Dr, 65830 Kriftel (DE); Kosina, Jörg, 61479 Schlossborn (DE); Scherl, Franz-Xaver, Dr., 84508 Burgkirchen (DE)
(74) Vertreter: Mikulecky, Klaus

(57) **Zusammenfassung**

Gegenstand der Erfindung sind wässrige Alkydharzdispersionen, enthaltend neben Wasser
(A) ein oder mehrere Alkydharze auf Basis von Polyolen, mehrwertigen Carbonsäuren und fetten Ölen oder freien, natürlichen und/oder synthetischen Fettsäuren, und
(B) mindestens einen Fettsäurepolyglycerinester als Emulgator.

## Beschreibung

Gegenstand der vorliegenden Erfindung sind wässrige Alkyd- oder Polyesterharzdispersionen, die unter Verwendung von Fettsäurepolyglycerinestern hergestellt und stabilisiert werden, sowie deren Verwendung für wässrige Alkydharzlacke.

Seit Inkrafttreten der Richtlinie 2004/42/EG der Europäischen Union zur Begrenzung der Emission flüchtiger organischer Verbindungen in Lacken und Farben sucht die Industrie nach Alternativtechnologien mit dem Ziel, organische Lösemittel durch Wasser zu ersetzten. Für höherwertige Anstrichmittel auf Holz und Metallen wurden mineralölhaltige Alkydharzlacke verwendet, die durch wässrige Alkydharzlacke ersetzt worden sind. Für wässrige Alkydharzlacke kommen wässrige Dispersionen von Alkydharzen oder Polyesterharzen zum Einsatz, die unter Zuhilfenahme von Emulgatoren hergestellt und stabilisiert werden.

AT 325742 beschreibt die Verwendung von nichtionischen Emulgatoren für Alkydharzdispersionen, deren hydrophober Teil aus zwei und mehr Resten ungesättigter Fettsäuren und /oder Fettalkoholen mit einer Jodzahl zwischen 130 und 200 und deren hydrophiler Teil aus Polyethylenglykol und /oder Monomethoxypolyethylenglykolketten aus 6 bis 100 Ethylenoxid-Einheiten besteht.

AT 333035 beschreibt ein Verfahren zur Herstellung wässriger Emulsionen von Alkydharzen, die unter Verwendung eines Emulgatorharzes dispergiert werden, das mit einem Polyethylenglykol mit 6 bis 100 Ethylenoxideinheiten modifiziert ist.

WO 91/09918 A1 beschreibt wasserverdünnbare Bindemittelgemische auf Basis von Polyethylenglykol-modifizierten Alkydharzen und deren Verwendung in oxidativ trocknenden Anstrichstoffen.

US 2003/0144397 A1 beschreibt die Verwendung von verzweigten, primären Alkoholalkoxylaten als Emulgatoren für wässrige Alkydharzdispersionen.

Die nach dem Stand der Technik zugänglichen Emulgatoren enthalten amphiphile Strukturen aus hydrophoben und hydrophilen Gruppen. Als hydrophobe Gruppen werden Fettsäure- oder Fettalkoholreste gewählt und als hydrophile Gruppe Polyglykolethergruppen aus Ethylenoxid und Propylenoxideinheiten.

Aufgabe der vorliegenden Erfindung war es, geeignete Emulgatoren zu finden, die für die Herstellung und Stabilisierung von Alkydharzdispersionen geeignet sind und mit deren Hilfe sich wässrige Alkydharzlacke herstellen lassen.

Überraschenderweise wurde gefunden, dass Fettsäurepolyglycerinester Alkydharzdispersionen in besonderer Weise stabilisieren. Die erfindungsgemäßen, Fettsäurepolyglycerinester enthaltenden Alkydharzdispersionen zeichnen sich durch besonders gute Lagerstabilität aus. Weiterhin sind die erfindungsgemäßen Alkydharzdispersionen für die Herstellung von wässrigen Alkydharzlacken und Hybridlacken aus Alkydharzen, Polyesterharzen und Emulsionspolymeren geeignet.

Gegenstand der Erfindung sind daher wässrige Alkydharzdispersionen, enthaltend neben Wasser
(A) ein oder mehrere Alkydharze auf Basis von Polyolen, mehrwertigen Carbonsäuren und fetten Ölen oder freien, natürlichen und/oder synthetischen Fettsäuren, und
(B) mindestens einen Fettsäurepolyglycerinester als Emulgator.

Weiterer Gegenstand der Erfindung ist die Verwendung mindestens eines Fettsäurepolyglycerinesters als Emulgator für wässrige Alkydharzdispersionen, enthaltend neben Wasser ein oder mehrere Alkydharze auf Basis von Polyolen, mehrwertigen Carbonsäuren und fetten Ölen oder freien, natürlichen und/oder synthetischen Fettsäuren.

Weiterer Gegenstand der Erfindung ist ein Verfahren zur Herstellung einer wässrigen Alkydharzdispersion, enthaltend neben Wasser ein oder mehrere Alkydharze auf Basis von Polyolen, mehrwertigen Carbonsäuren und fetten Ölen oder freien, natürlichen und/oder synthetischen Fettsäuren, indem dem Alkydharz Wasser, und mindestens ein Fettsäurepolyglycerinester als Emulgator zugesetzt und die Mischung homogenisiert wird.

In einer weiteren bevorzugten Ausführungsform enthalten die erfindungsgemäßen wässrigen Alkydharzdispersionen neben Wasser und den Bestandteilen (A) und (B)
(C) weitere für Dispersionen verwendete Hilfsstoffe wie Netzmittel, Dispergiermittel, Entschäumer, Rheologieadditive, Biozide, Fungizide, Algizide, Puffersubstanzen wie Natronlauge, Ammoniaklösung, Amine wie 2-Amino-2-methyl-1-propanol, Säuren wie Schwefelsäure, Salzsäure und Essigsäure sowie ein oder mehrere Lösemittel.

Weiterer Gegenstand der Erfindung ist ein wässriger Alkydharzlack, enthaltend neben Wasser
(A) ein oder mehrere Alkydharze auf Basis von Polyolen, mehrwertigen Carbonsäuren und fetten Ölen oder freien, natürlichen und/oder synthetischen Fettsäuren,
(B) mindestens einen Fettsäurepolyglycerinester als Emulgator, und
(D) Hilfsstoffe für die Beschichtung von metallischen, mineralischen und/oder Kunststoffoberflächen, die aus den als Komponente (C) beschriebenen Hilfsstoffen ausgewählt sind.

Die erfindungsgemäßen wässrigen Alkydharzdispersionen werden zur Herstellung von Alkydharzlacken unter Zugabe von weiteren für Alkydharzlacke typischen Komponenten verwendet.

In einer bevorzugten Ausführungsform enthalten die erfindungsgemäßen wässrigen Alkydharzlacke
(E) ein oder mehrere anorganische oder organische Pigmente.
In einer weiteren bevorzugten Ausführungsform enthalten die erfindungsgemäßen wässrigen Alkydharzdispersionen
(F) eine oder mehrere Polymerdispersionen, hergestellt nach dem Emulsionspolymerisationsverfahren aus olefinisch ungesättigten Monomeren.
Nach Römpp, Georg Thieme Verlag, Onlineausgabe © 2010 , handelt es sich bei Alkydharzen um Polykondensationsharze aus Polyolen, mehrwertigen Carbonsäuren und fetten Ölen oder freien natürlichen und/oder synthetischen Fettsäuren, wobei mindestens ein Polyol tri- oder höherfunktionell sein muss. Fettsäuren enthalten vorzugsweise 6 bis 24 Kohlenstoffatome und 0, 1, 2, oder 3 Doppelbindungen. Als Polyol kommen vorzugsweise solche mit 3 bis 8 Kohlenstoffatomen und 3 bis 6 OH-Gruppen, insbesondere Glycerin, Trimethylolpropan und Pentaerythritol zum Einsatz. Als mehrwertige Carbonsäuren, bevorzugt Dicarbonsäuren, bzw. deren Anhydriden werden vorzugsweise Phthalsäureanhydrid, Isophthalsäure und aliphatische Dicarbonsäuren mit vorzugsweise 4 bis 20 Kohlenstoffatomen verwendet. Alkydharze werden nach dem Fettsäuretriacylglycerol-Gehalt (Ölgehalt, Öllänge) unterteilt in kurzölige Alkydharze mit < 40 Gew.-%, mittelölige Alkydharze mit 40 - 60 Gew.-% und langölige Alkydharze mit > 60 Gew.-% Triacylglycerol, bezogen auf das lösemittelfreie Alkydharz. Aus der Anzahl und Lage der Fettsäure-Doppelbindungen und dem Öl- bzw. Fettsäure-Gehalt resultiert ein unterschiedliches Trocknungsverhalten, das sich aus der Überlagerung von physikalischer Trocknung und oxidativer Vernetzung oder Trocknung ergibt. Die Doppelbindungen befähigen zur oxidativen Trocknung unter dem Einfluss von Luftsauerstoff, die durch geeignete Kobalt- und Zirkoniumfettsäuresalze katalysiert wird. Alkydharze und Alkydharzlacke werden auch in DIN 55945 beschrieben.

Überraschenderweise wurde gefunden, dass Fettsäurepolyglycerinester in hervorragender Weise Alkydharze in Wasser dispergieren. Für die Herstellung der erfindungsgemäßen Alkydharzdispersionen werden Fettsäurepolyglycerinester verwendet, die vorzugsweise ungesättigt sind und bevorzugt 2 oder 3 Doppelbindungen pro Fettsäurerest enthalten, und besonders bevorzugt ω-3-Fettsäuren. Daher sind besonders solche natürlichen Fettsäuren geeignet, die reich sind an Linolsäure, Linolensäure oder Arachidonsäure. Das zur Herstellung der Fettsäurepolyglycerinester verwendete Polyglycerin hat im allgemeinen einen Kondensationsgrad von 2 bis 100, bevorzugt von 4 bis 20 und in einer weiteren besonders bevorzugten Ausführungsform von 6 bis 10. Besonders geeignet sind Fettsäurepolyglycerinester mit einem molaren Verhältnis von Fettsäure zu Polyglycerin von 1 zu 1 bis 10 zu 1, besonders bevorzugt ist ein molares Verhältnis von 1 zu 1 bis 2 zu 1.

Die erfindungsgemäß verwendeten Fettsäurepolyglycerinester lassen sich durch die folgende chemische Strukturformel beschreiben, 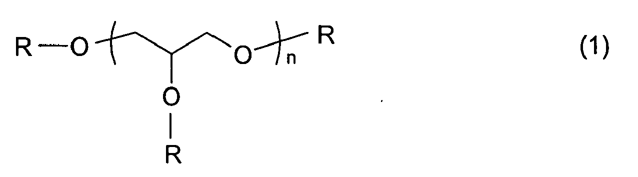 worin
- R: eine Gruppe der Formel 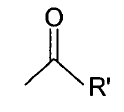 oder ein Wasserstoffatom ist, mit der Maßgabe, dass nicht alle Reste R für Wasserstoff stehen,
- n: ein ganze Zahl von 2 bis 100, und
- R': ein aliphatischer Kohlenwasserstoffrest mit 5 bis 21 Kohlenstoffatomen und 0 bis 3 Doppelbindungen ist.

Die Reste R können gleich oder verschieden sein.

Die erfindungsgemäßen wässrigen Alkydharzdispersionen enthalten im allgemeinen 20 bis 80 Gew.-%, bevorzugt 40 Gew.-% bis 70 Gew.-% und besonders bevorzugt 50 bis 65 Gew.-% Alkydharz (Komponente A).

Die erfindungsgemäßen wässrigen Alkydharzdispersionen enthalten im Allgemeinen 0,1 bis 15 Gew.-%, bevorzugt 0,5 bis 10 und besonders bevorzugt 2 bis 8 Gew.-% Fettsäurepolyglycerinester (Komponente B).

Die erfindungsgemäßen wässrigen Alkydharzdispersionen enthalten vorzugsweise Wasser ad 100 Gew.-%.

Die erfindungsgemäßen wässrigen Alkydharzdispersionen enthalten gegebenenfalls 0,01 bis 35 Gew.-%, bevorzugt 0,1 Gew.-% bis 15 Gew.-% und besonders bevorzugt 0,2 bis 5 Gew.-% der Hilfsstoffe (Komponente C).

In einer bevorzugten Ausführungsform werden die oben beschriebenen Alkydharzdispersionen zur Herstellung von wässrigen Alkydharzlacken verwendet.

Die erfindungsgemäßen wässrigen Alkydharzdispersionen sind eine physikalisch oder oxidativ trocknende Harzkomponente.

Die für die Herstellung der Alkydharzlacke angeführten Hilfsstoffe (Komponente D) für die Beschichtung von metallischen, mineralischen und/oder Kunststoffoberflächen sind aus der gleichen Gruppe ausgewählt wie die Hilfsstoffe für die erfindungsgemäßen wässrigen Alkydharzdispersionen.

Zur Herstellung der wässrigen Alkydharzlacke oder Alkydharzdispersionen werden gegebenenfalls Hilfsstoffe wie Netzmittel, Dispergiermittel, Entschäumer, Rheologieadditive, Biozide, Fungizide, Algizide, Wachse, Puffersubstanzen wie Natronlauge, Ammoniaklösung, Amine wie 2-Amino-2-methyl-1-propanol, Säuren wie Schwefelsäure, Salzsäure und Essigsäure verwendet (Komponenten C, D).

Als Netz- und Dispergiermittel eignen sich nichtionische Tenside aus der Klassen der Alkylpolyethylenglykolether, Fettsäureethoxylate, Alkylpolyglykoside, Sorbitanesterethoxylate, Alkindiolethoxylate, Ethylenoxid und Propylenoxid-Blockcopolymere und Additionsprodukte von Ethylenoxid und Propylenoxid an Alkohole, Methyl-, Butyl- und Benzyl-endgruppenverschlossene Alkoholethoxylate und Alkylphenolethoxylayte. Weiterhin werden Netz- und Dispergiermittel aus der Klasse der anionischen Tenside aus der Gruppe der Natrium-, Kalium- und Ammoniumsalze von Fettsäuren, Natriumalkylbenzolsulfonate, Natriumalkylsulfonate, Natriumolefinsulfonate, Natriumpolynaphthalinsulfonate, Natriumdialkyldiphenyletherdisulfonate, Natrium-, Kalium- und

Ammoniumalkylsulfate, Natrium-, Kalium- und

Ammoniumalkylpolyethylenglykolethersulfate, Natrium-, Kalium- und Ammoniumalkylphenolpolyethylenglykolethersulfate, Natrium-, Kalium- und Ammoniummono- und dialkylsulfosuccinate und Monoalkylpolyoxethylsulfosuccinate, sowie Alkylpolyethylenglykol-etherphosphorsäuremono-, di- und triester und deren Mischungen und Alkylphenolpolyethylenglykoletherphosphorsäuremono-, di- und triester und deren Mischungen, sowie deren Natrium-, Kalium- und Ammoniumsalze verwendet.

Als Dispergiermittel für anorganische Pigmente werden Homo- und Copolymere der Acrylsäure, Methacylsäure, Maleinsäure, Fumarsäure und Acryl- und Methacrylsäureester und deren Natrium-, Kalium- und Ammoniumsalze verwendet.

Insbesondere werden 0,01 bis 3 Gew.-%, bevorzugt 0,05 bis 2 Gew.-% und besonders bevorzugt 0,1 bis 1,0 Gew.-% Netz- und Dispergiermittel oder Mischungen verschiedener Netz- und Dispergiermittel zur Herstellung der wässrigen Alkydharzlacke oder Alkydharzdispersionen verwendet.

Als Entschäumer eignen sich Mineralölentschäumer, Siliconentschäumer oder Entschäumer auf Basis von Polyalkylenglykolethern. Entschäumende Komponenten der genannten Entschäumerklassen sind hydrophobe Feststoffteilchen wie hydrophobmodifizierte Silica, Fettsäuresalze zwei und dreiwertiger Kationen wie Aluminiumstearat und Calciumstearat, Amidwachse wie Ethylenbisstearylamid und Siliconharze.

Insbesondere werden 0,001 bis 2,0 Gew.-%, bevorzugt 0,01 bis 1,0 Gew.-% und besonders bevorzugt 0,1 bis 0,5 Gew.-% Entschäumer oder Mischungen verschiedener Entschäumer zur Herstellung der wässrigen Alkydharzlacke oder Alkydharzdispersionen verwendet.

Übliche Rheologieadditive sind Bentonite, Silica, Celluloseether, hydrophobmodifizerte Urethane und alkalilösliche Acrylatverdicker.

Insbesondere werden 0,1 bis 5,0 Gew.-%, bevorzugt 0,3 bis 3,0 Gew.-% und besonders bevorzugt 0,5 bis 2,0 Gew.-% Rheologieadditive oder Mischungen verschiedener Rheologieadditive zur Herstellung der wässrigen Alkydharzlacke oder Alkydharzdispersionen verwendet.

Die mit den erfindungsgemäßen Alkydharzdispersionen hergestellten wässrigen Alkydharzlacke oder Alkydharzdispersionen enthalten üblicherweise Konservierungsmittel, um den Befall mit Mikroorganismen zu verhindern. Übliche Konservierungsstoffe sind Formaldehyd und Formaldehyd-abspaltende Verbindungen wie Dihydroxy-2,5-dioxahexan, Chlormethylisothiazolinon, Benzisothiazolinon, Benzimidazolinon und Bronopol. Zur Verhinderung des Befalls mit Pilzen und Algen können den wässrigen Alkydharzlacke oder Alkydharzdispersionenn Filmkonservierungsmittel zugesetzt werden. Beispielsweise eignen sich Diuron, Carbendazim, Octylisothiazolinon, Dichloroctylisothiazolinon, Zinkpyrithion, Terbutryn und lrgarol als Filmkonservierungsmittel.

Insbesondere werden 0,01 bis 1,0 Gew.-% und bevorzugt 0,05 bis 0,5 Gew.-% Konservierungsmittel und gegebenenfalls 0,1 bis 5,0 Gew.-% und bevorzugt 0,2 bis 2,0 Gew.-% Filmkonservierungsmittel zur Herstellung der wässrigen Alkydharzlacke oder Alkydharzdispersionen verwendet.

Als Puffersubstanzen werden Säuren und Alkalien wie Natronlauge, Ammoniaklösung, Amine wie 2-Amino-2-methyl-1-propanol, Triethanolamin, Dimethylaminoethanol und Säuren wie Schwefelsäure, Salzsäure, Essigsäure und Ameisensäure verwendet.

Insbesondere werden 0,01 bis 1,0 Gew.-% und bevorzugt 0,05 bis 0,5 Gew.-% Puffersubstanzen zur Herstellung der wässrigen Alkydharzlacke oder Alkydharzdispersionen verwendet. Der bevorzugte, durch die Puffersubstanzen einzustellende pH-Wert liegt zwischen 6 und 9, insbesondere zwischen 7 und 8.

Geeignete Lösemittel oder Lösemittelgemische zur Verwendung in wässrigen Alkydharzdispersionen oder wässrigen Alkydharzlacken können aus der Gruppe der Kohlenwasserstoffe, sauerstoffhaltigen, stickstoffhaltigen oder sonstige heteroatomhaltigen Lösemittel ausgewählt werden inklusive aus der Gruppe der Halogenkohlenwasserstoffe. Diese Lösemittel können die Dispersionsstabilität oder die Verfilmung der wässrigen Alkydharzlacke verbessern. Die erfindungsgemäßen wässrigen Alkydharzdispersionen sowie die daraus hergestellten wässrigen Alkydharzlacke können 0,1 bis 20 %, vorzugsweise 1 bis 10 % und besonders bevorzugt 2 bis 8 % Lösemittel enthalten. Beispiele geeigneter Lösemittel sind:
- aliphatische, aromatische, naphthenische oder alizyklische Kohlenwasserstoffe,
- Alkohole wie beispielsweise Ethanol, Propanol, Butanol, Pentanol, 2-Ethylhexanol, Benzylalkohol, Glycerin, Pentaethytritol, Trimethoxypropan,
- Glycole und Glykolether wie beispielsweise Ethylenglykol, Propylenglykol, Diethylenglykolether, Methoxypropanol, Dipropylenglycolmethylether, Tripropylenglycolmethylether, Monoethylenglykolmonobutylether, Diethylenglykolmonobutylether, Dipropylenglykoldimethylether, Polyethylenglykole, Polyethylenglykoldimethylether, Polyethylenglykoldiethylether, Polyethylenglykoldibutylether,
- Ether und Ketone wie beispielsweise Tetrahydrofuran, Tetrahydrofurfurylalkohol, Furfurylalkohol, Methylisobutylketon, Cyclohexanon,
- Ester wie beispielsweise Butylacetat, Butoxyethylacetat, Butyldiglykolacetat, Propylecarbonat, Rapsölmethylester, Soyaölmethylester, Trimethylpentan-1,3-diolmonoisobutyrat, Milchsäureester längerkettiger Alkohole, Dimethylphthalat,
- Halogenierte Kohlenwasserstoffe wie beispielsweise chlorinierte und fluorinierte Kohlenwasserstoffe, Chloroform und Dichormethan
- Sonstige heteroatomhaltige Lösemittel wie beispielsweise Ethanolamin, Aminomethylpropanol, Dimethylformamid, Dimethylacetamid, N-Methylpyrrolidon und N-Ethylpryrrolidon.

Die Summe der zur Herstellung der wässrigen Alkydharzlacke oder Alkydharzdispersionen verwendeten Hilfsstoffe (Komponenten C, D) beträgt insbesondere 0,1 bis 35 Gew.-%, bevorzugt 0,2 bis 15 Gew.-% und besonders bevorzugt 0,5 bis 5 Gew.-%.

Gegebenenfalls werden den erfindungsgemäßen wässrigen Alkydharzlacken 0,01 Gew.-% bis 60 Gew.-%, bevorzugt 0,5 Gew.-% bis 30 Gew.-% und besonders bevorzugt 1 Gew.-% bis 25 Gew.-% anorganische oder organische Pigmente zugesetzt wie sie in der Farben und Lackindustrie üblich sind (Komponente E).

Geeignete anorganische Pigmente sind Eisenoxide, Magnetite, Manganeisenoxide, Chromoxide, Ultramarin, Nickel- oder Chromantimontitanoxide, Mangantitanrutile, Cobaltoxide, Mischoxide des Cobalts und Aluminiums, Rutilmischphasenpigmente, Sulfide der seltenen Erden, Spinelle des Cobalts mit Nickel und Zink, Spinelle basierend auf Eisen und Chrom mit Kupfer Zink sowie Mangan, Bismutvanadat sowie Verschnittpigmente. Insbesondere werden die Colour Index Pigmente Pigment Yellow 184, Pigment Yellow 53, Pigment Yellow 42, Pigment Yellow Brown 24, Pigment Red 101, Pigment Blue 28, Pigment Blue 36, Pigment Green 50, Pigment Green 17, Pigment Black 11 und Pigment Black 33 verwendet.

Als organische Pigmente kommen Monoazo-, Disazo-, verlackte Azo-, β-Naphthol-, Naphthol AS-, Benzimidazolon-, Disazokondensations-, Azo-MetallkomplexPigmente und polycyclische Pigmente wie z.B. Phthalocyanin-, Chinacridon-, Perylen-, Perinon-, Thioindigo-, Anthanthron-, Anthrachinon-, Flavanthron-, Indanthron-, lsoviolanthron-, Pyranthron-, Dioxazin-, Chinophthalon-, Isoindolinon-, Isoindolin- und Diketopyrrolopyrrol-Pigmente oder Ruße in Betracht.

Als beispielhafte Auswahl besonders bevorzugter organischer Pigmente sind dabei Rußpigmente, wie z. B. Gas- oder Furnaceruße; Monoazo- und Disazopigmente, insbesondere die Colour Index Pigmente Pigment Yellow 1, Pigment Yellow 3, Pigment Yellow 12, Pigment Yellow 13, Pigment Yellow 14, Pigment Yellow 16, Pigment Yellow 17, Pigment Yellow 73, Pigment Yellow 74, Pigment Yellow 81, Pigment Yellow 83, Pigment Yellow 87, Pigment Yellow 97, Pigment Yellow 111, Pigment Yellow 126, Pigment Yellow 127, Pigment Yellow 128, Pigment Yellow 155, Pigment Yellow 174, Pigment Yellow 176, Pigment Yellow 191, Pigment Yellow 213, Pigment Yellow 214, Pigment Yellow 219, Pigment Red 38, Pigment Red 144, Pigment Red 214, Pigment Red 242, Pigment Red 262, Pigment Red 266, Pigment Red 269, Pigment Red 274, Pigment Orange 13, Pigment Orange 34 oder Pigment Brown 41; β-Naphthol- und Naphthol AS-Pigmente, insbesondere die Colour Index Pigmente Pigment Red 2, Pigment Red 3, Pigment Red 4, Pigment Red 5, Pigment Red 9, Pigment Red 12, Pigment Red 14, Pigment Red 53:1, Pigment Red 112, Pigment Red 146, Pigment Red 147, Pigment Red 170, Pigment Red 184, Pigment Red 187, Pigment Red 188, Pigment Red 210, Pigment Red 247, Pigment Red 253, Pigment Red 256, Pigment Orange 5, Pigment Orange 38 oder Pigment Brown 1; verlackte Azo- und Metallkomplexpigmente, insbesondere die Colour Index Pigmente Pigment Red 48:2, Pigment Red 48:3, Pigment Red 48:4, Pigment Red 57:1, Pigment Red 257, Pigment Orange 68 oder Pigment Orange 70; Benzimidazolinpigmente, insbesondere die Colour Index Pigmente Pigment Yellow 120, Pigment Yellow 151, Pigment Yellow 154, Pigment Yellow 175, Pigment Yellow 180, Pigment Yellow 181, Pigment Yellow 194, Pigment Red 175, Pigment Red 176, Pigment Red 185, Pigment Red 208, Pigment Violet 32, Pigment Orange 36, Pigment Orange 62, Pigment Orange 72 oder Pigment Brown 25; Isoindolinon- und Isoindolinpigmente, insbesondere die Colour Index Pigmente Pigment Yellow 139 oder Pigment Yellow 173; Phthalocyaninpigmente, insbesondere die Colour Index Pigmente Pigment Blue 15, Pigment Blue 15:1, Pigment Blue 15:2, Pigment Blue 15:3, Pigment Blue 15:4, Pigment Blue 15:6, Pigment Blue 16, Pigment Green 7 oder Pigment Green 36; Anthanthron-, Anthrachinon-, Chinacridon-, Dioxazin-, Indanthron-, Perylen-, Perinon- und Thioindigopigmente, insbesondere die Colour Index Pigmente Pigment Yellow 196, Pigment Red 122, Pigment Red 149, Pigment Red 168, Pigment Red 177, Pigment Red 179, Pigment Red 181, Pigment Red 207, Pigment Red 209, Pigment Red 263, Pigment Blue 60, Pigment Violet 19, Pigment Violet 23 oder Pigment Orange 43; Triarylcarboniumpigmente, insbesondere die Colour Index Pigmente Pigment Red 169, Pigment Blue 56 oder Pigment Blue 61; Diketopyrrolopyrrolpigmente, insbesondere die Colour Index Pigmente Pigment Red 254, Pigment Red 255, Pigment Red 264, Pigment Red 270, Pigment Red 272, Pigment Orange 71, Pigment Orange 73, Pigment Orange 81 zu nennen.

Mischungen von organischen mit anorganischen Pigmenten werden ebenfalls häufig verwendet.

Darüber hinaus werden Pigmente zum Rostschutz verwendet, wie beispielsweise metallisches Zink oder Aluminium, die als Opferanode wirken und so metallische Untergründe vor Korrosion schützten. Auch Metalleffektpigmente wie Aluminiumplättchen oder Bronzeplättchen und Schichtsilikate wie Glimmer und Feldspate können gegebenenfalls der wässrigen Alkydharzdispersion zugesetzt werden.

In einer weiteren Ausführungsform der Erfindung werden den erfindungsgemäßen wässrigen Alkydharzdispersionen gegebenenfalls 0,1 bis 20 Gew.-% und bevorzugt 5 bis 15 Gew.-% einer oder mehrerer Polymerdispersionen (Komponente F) zugegeben, die nach dem Emulsionspolymerisationsverfahren hergestellt wurden. Zur Herstellung solcher Polymerdispersionen sind einfach olefinisch ungesättigte Monomere geeignet. Bevorzugte olefinisch ungesättigte Monomere sind beispielsweise:
- Vinylmonomere, wie Carbonsäureester des Vinylalkohols, beispielsweise Vinylacetat, Vinylpropionat, Vinylether der Isononansäure oder der lsodecansäure,
- Arylsubstituierte Olefine, wie Styrol und Stilben
- Olefinisch ungesättigte Carbonsäureester, wie Methylacrylat, Ethylacrylat, Propylacrylat, n-Butylacrylat, i-Butylacrylat, Pentylacrylat, Hexylacrylat, 2 Ethylhexylacrylat, Hydroxyethylacrylat sowie die entsprechenden Methacrylsäureester,
- olefinisch ungesättigte Dicarbonsäureester, wie Dimethylmaleinat, Diethylmaleinat, Dipropylmaleinat, Dibutylmaleinat, Dipentylmaleinat, Dihexylmaleinat und Di 2 ethylhexylmaleinat,
- olefinisch ungesättigte Carbonsäuren und Dicarbonsäuren, wie Acrylsäure, Methacrylsäure, Itaconsäure, Maleinsäure und Fumarsäure und ihre Natrium-, Kalium- und Ammoniumsalze,
- olefinisch ungesättigte Sulfonsäuren und Phosphonsäuren und Alkali- und Ammoniumsalze, wie Acrylamidomethylpropansulfonsäure und ihre Alkali- und Ammonium-, Alkylammonium- und Hydroxyalkylammoniumsalze, Allylsulfonsäure und ihre Alkali- und Ammoniumsalze, Acryloyloxethylphosphonsäure und ihre Ammonium- und Alkalisalze sowie die entsprechenden Methacrylsäurederivate,
- olefinisch ungesättigte Amine, Ammoniumsalze, Nitrile und Amide, wie Dimethylaminoethylacrylat, Acryloyloxethyltrimethylammoniumhalide, Acrylnitril, N Methylolacrylamid sowie die entsprechenden Methacrylsäurederivate und Vinylmethylacetamid.

In einer bevorzugten Ausführungsform werden die oben genannten olefinisch ungesättigten Monomere mit weiteren Comonomeren, vorzugsweise Olefinen oder halogenierten Olefinen mit 2 bis 8 Kohlenstoffatomen wie z. B. Ethylen, Propen, Butene, Pentene, 1,3-Butadien, Chloropren, Vinylchlorid, Vinylidenchlorid, Vinylidenfluorid und Tetrafluorethylen polymerisiert.

Die mit den erfindungsgemäßen Alkydharzdispersionen hergestellten wässrigen Alkydharzlacken können gegebenenfalls weitere Komponenten zugesetzt werden. Wässrige Alkydharzlacke werden mit organischen und anorganischen Abtönpasten versetzt, um einen gewünschten Farbton einzustellen.

Die mit den erfindungsgemäßen Alkydharzdispersionen hergestellten wässrigen Alkydharzlacken können darüber hinaus weitere filmbildende Komponenten enthalten, wie Silikonharze oder Emulsionspolymere.

### Beispiele

### Beispiel 1

120 g eines langöligen lufttrocknenden Alkydharzes (Vialkyd VAF 6091, Cytec Industries Inc.) werden in einem Becherglas vorgelegt und auf 60 °C geheizt. Anschließend werden 12 g eines Esters aus Sonnenblumenölsäure und Polyglycerin mit im Durchschnitt ca. 8,1 Glycerineinheiten und einem molaren Verhältnis von Fettsäure zu Polyglycerin von 1 zu 1 zugegeben. Der Ester hat eine Verseifungszahl von 65 mg KOH /g und eine OH-Zahl von 554 g KOH /g. Anschließend werden bei 60 °C unter Rühren 68 g entsalztes Wasser zugeben bis eine homogene, milchige Dispersion erhalten wird. Diese Dispersion wird bei 800 bar einmalig über einen Laborhochdruckhomogenisator APV 1000 der Fa. APV Deutschland GmbH gegeben.

Anschließend wird von der Alkydharzdispersion mit einem Malvern Zetasizer die Tröpfchengröße sowie die Brookfield - Viskosität bestimmt und die Lagerstabilität der Dispersion nach 3 Tagen bei 25 °C und nach 7 Tagen bei 60 °C beurteilt.

### Beispiel 2

Eine wässrige Alkydharzdispersion wird wie in Beispiel 1 beschrieben mit einem

Ester aus Rapsölsäure und Polyglycerin mit im Durchschnitt ca. 8,1 Glycerineinheiten und einem molaren Verhältnis von Fettsäure zu Polyglycerin von 1 zu 1 zugegeben. Der Ester hat eine Verseifungszahl von 70 mg KOH /g und eine OH-Zahl von 497 g KOH /g.

### Beispiel 3

Eine wässrige Alkydharzdispersion wird wie in Beispiel 1 beschrieben mit einem Ester aus Leinsamenölsäure und Polyglycerin mit im Durchschnitt ca. 8,1 Glycerineinheiten und einem molaren Verhältnis von Fettsäure zu Polyglycerin von 1 zu 1 zugegeben. Der Ester hat eine Verseifungszahl von 68 mg KOH /g und eine OH-Zahl von 490 g KOH /g.

### Beispiel 4 (Vergleich)

Anstelle von Fettsäurepolyglycerinestern wird in einem Vergleichsbeispiel nach dem Stand der Technik ein Alkoholethoxylat für die Herstellung der wässrigen Alkydharzdispersion verwendet. Dazu wird wie in Beispiel 1 beschrieben eine wässrige Alkydharzdispersion hergestellt. Statt des Esters wird ein C₁₁-Alkoholethoxylat mit ca. 7 Mol Ethylenoxid verwendet.

**Tabelle 1: Eigenschaften der Alkydharzdispersionen**

| Beispiel | 1 | 2 | 3 | 4 (V) |
|---|---|---|---|---|
| Tröpfchengröße | 730 nm | 700 nm | 660 nm | 370 nm |
| Viskosität | 145 mPas | 120 mPas | 160 mPas | 560 nm |
| Äußeres nach 3 Tagen bei 25 °C | Homogen | Homogen | Homogen | Homogen |
| Äußeres nach 7 Tagen bei 60 °C | Homogen | Homogen | Homogen | 2 Phasen |

Die erfindungsgemäßen wässrigen Alkydharzdispersionen zeigen eine bessere Lagerstabilität und neigen ebenfalls weniger zum Schäumen als die nach dem Stand der Technik hergestellte wässrige Alkydharzdispersion.

### Beispiel 5

Die erfindungsgemäßen wässrigen Alkydharzdispersionen werden in folgender Weise für die Formulierung eines wässrigen Alkydharzlackes eingesetzt. Alle in dieser Anmeldung vorgenommen Prozentangaben sind, sofern nicht anders gekennzeichnet, Gewichtsprozente.

**Tabelle 2: Zusammensetzung des wässrigen Alkydharzlackes**

| Nr. | Produkt | Chemie, Hersteller | Gew.-% |
|---|---|---|---|
| 1 | Wasser | | 13,3 % |
| 2 | Mowiplus^{®} XW 330 | Dispergiermittel, Celanese | 0,6 % |
| 3 | Borchigen^{®} DFN | Netzmittel, Borchers | 0,4 % |
| 4 | Nuvis^{®} FX 1025 | Urethanverdicker, Elementis | 0,6% |
| 5 | Agitan^{®} 295 | Entschäumer, Münzing | 0,1 % |
| 6 | Titandioxid Kronos 2190 | Weißpigment, Kronos | 28,0 % |
| 7 | Wässrige Alkydharzdispersion | gemäß den Beispielen 1-4 | 50,0 % |
| 8 | Nuvis^{®} FX 531 | Verdicker, Elementis | 2,0 % |
| 9 | Durham^{®} VX 71 WM | Kombitrockner, Elementis | 2,0 % |
| 10 | Aquacer^{®} 531 | Wachsdispersion, Byk | 3,0 % |
| | Summe | | 100,0 % |

Zur Herstellung des wässrigen Alkydharzlackes wird Komponente 1 vorgelegt, und es werden unter Rühren mit einer Dissolverscheibe in obiger Reihenfolge die Komponenten 2 bis 6 zugegeben, bis eine fließfähige, homogene Pigmentdispersion entsteht. Zu der Pigmentdispersion wird die wässrige Alkydharzdispersion aus den Beispielen 1 bis 4 unter langsamem Rühren zugegeben (Komponente 7) und anschließend die verbleibenden Komponenten 8 bis 10 zudosiert. Von dem resultierenden wässrigen Alkydharzlacken wurden Stabilitätstest durchgeführt, sowie Farbaufstriche mit einer 120 µm - Rakel auf Leneta-Papier gezogen.

Weiterhin wurden die resultierenden wässrigen Alkydharzlacke mit folgender Abtönpaste gemischt.

Blaue Abtönpaste PB 15:3

| | | |
|---|---|---|
| 45 % | | Phthalocyanin Blau mit dem Color Index PB 15:3 |
| 6 % | | Dispersogen^{®} PTS (Dispergiermittel) |
| 10 % | | Polyglykol G 200 (Feuchthaltemittel) |
| 0,3 % | | D-Foam-R C 732 (Entschäumer) |
| 0,2 % | | Nipacide^{®} BSM (Biozid) |
| 38,5 % | | Wasser |

Zum Abtönen der wässrigen Alkydharzlacke wird 8 % blaue Abtönpaste bezogen auf den Lack manuell eingerührt, bis die Farbpaste gleichmäßig im Lack verteilt ist. Vom abgetönten wässrigen Alkydharzlack wird ein Farbaufstrich auf Leneta-Papier gezogen und die Farbstärke bestimmt.

**Tabelle 3: Eigenschaften der Alkydharzlacke**

| Beispiel | 1 | 2 | 3 | 4 (V) |
|---|---|---|---|---|
| Äußeres des Lacks nach 3 Tagen bei 25 °C | Homogen | Homogen | Homogen | Homogen |
| Brookfield-Viskosität | 2230 mPas | 1950 mPas | 1950 mPas | 700 mPas |
| Trocknungszeit des Farbfilms | 3 - 4 Stunden | 3 - 4 Stunden | 3 - 4 Stunden | 3 - 4 Stunden |
| Glanz des weißen Farbfilms bei 60 ° Einfallwinkel | 85 % | 87 % | 69 % | 28 % |
| Farbstärke des blau abgetönten Farbfilms | 158 % | 165 % | 158 % | 100 % |

Die mit den erfindungsgemäßen wässrigen Alkydharzdispersionen hergestellten wässrigen Alkydharzlacke nach den Beispielen 1-3 zeigen einen verbesserten Glanz und eine bessere Pigmentkompatibilität gegenüber dem Vergleichsbeispiel 4, was nach dem Abtönen in einer höheren Farbstärke resultiert.

## Patentansprüche

1. Wässrige Alkydharzdispersionen, enthaltend neben Wasser
(A) ein oder mehrere Alkydharze auf Basis von Polyolen, mehrwertigen Carbonsäuren und fetten Ölen oder freien, natürlichen und/oder synthetischen Fettsäuren, und
(B) mindestens einen Fettsäurepolyglycerinester als Emulgator.

2. Wässrige Alkydharzdispersionen nach Anspruch 1, enthaltend (C) 0,01 bis 35 Gew.-% weitere für Dispersionen verwendete Hilfsstoffe, ausgewählt aus Netzmittel, Dispergiermittel, Entschäumer, Rheologieadditive, Biozide, Fungizide, Algizide, Puffersubstanzen, Amine, Säuren.

3. Wässrige Alkydharzdispersionen nach Anspruch 1 und/oder 2, enthaltend (F) 0,1 bis 20 Gew.-% einer oder mehrerer Polymerdispersionen, hergestellt nach dem Emulsionspolymerisationsverfahren aus olefinisch ungesättigten organischen Verbindungen.

4. Wässrige Alkydharzdispersionen nach Anspruch 3, worin die olefinisch ungesättigten organischen Verbindungen ausgewählt sind aus Vinylmonomeren, arylsubstituierten Olefinen, olefinisch ungesättigten Carbonsäureestern, olefinisch ungesättigten Dicarbonsäureestern, olefinisch ungesättigten Carbonsäuren und Dicarbonsäuren, olefinisch ungesättigten Sulfonsäuren und Phosphonsäuren und Alkali- und Ammoniumsalzen, olefinisch ungesättigten Amine, Ammoniumsalzen, Nitrilen und Amiden, Olefinen oder halogenierten Olefinen mit 2 bis 8 Kohlenstoffatomen.

5. Wässrige Alkydharzdispersionen nach einem oder mehreren der Ansprüche 1 bis 4, enthaltend Fettsäurepolyglycerinester der Formel 1 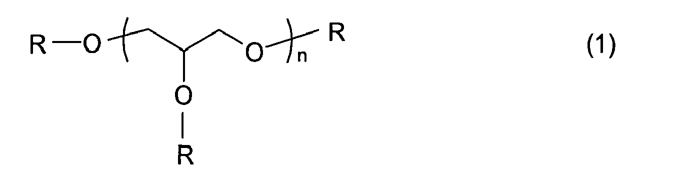 worin
R eine Gruppe der Formel 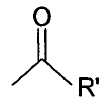 oder ein Wasserstoffatom ist, mit der Maßgabe, dass nicht alle Reste R für Wasserstoff stehen,
n ein ganze Zahl von 2 bis 100, und
R' ein aliphatischer Kohlenwasserstoffrest mit 5 bis 21 Kohlenstoffatomen und 0 bis 3 Doppelbindungen ist.

6. Wässrige Alkydharzdispersionen nach Anspruch 5, worin n eine Zahl von 4 bis 20 ist.

7. Wässrige Alkydharzdispersionen nach einem oder mehreren der Ansprüche 1 bis 6, worin der Fettsäurepolyglycerinester ein molares Verhältnis von Fettsäure zu Polyglycerin von 1 zu 1 bis 10 zu 1 aufweist.

8. Wässrige Alkydharzdispersionen nach einem oder mehreren der Ansprüche 1 bis 7, welche einen Gehalt von 20 bis 80 Gew.-% Alkydharz aufweisen.

9. Wässrige Alkydharzdispersionen nach einem oder mehreren der Ansprüche 1 bis 8, welche einen Gehalt von 1 bis 15 Gew.-% Fettsäurepolyglycerinester aufweisen.

10. Wässrige Alkydharzdispersionen nach einem oder mehreren der Ansprüche 1 bis 9, welche Wasser ad 100 Gew.-% enthalten.

11. Wässrige Alkydharzdispersionen nach einem oder mehreren der Ansprüche 1 bis 10, worin das Polyglycerin 2 bis 100 Glycerineinheiten umfasst.

12. Verwendung mindestens eines Fettsäurepolyglycerinesters als Emulgator für wässrige Alkydharzdispersionen, enthaltend neben Wasser ein oder mehrere Alkydharze auf Basis von Polyolen, mehrwertigen Carbonsäuren und fetten Ölen oder freien, natürlichen und/oder synthetischen Fettsäuren.

13. Verfahren zur Herstellung einer wässrigen Alkydharzdispersion, enthaltend neben Wasser ein oder mehrere Alkydharze auf Basis von Polyolen, mehrwertigen Carbonsäuren und fetten Ölen oder freien, natürlichen und/oder synthetischen Fettsäuren, indem dem Alkydharz Wasser, und mindestens ein Fettsäurepolyglycerinester als Emulgator zugesetzt und die Mischung homogenisiert wird.

14. Wässriger Alkydharzlack, enthaltend neben Wasser
(A) ein oder mehrere Alkydharze auf Basis von Polyolen, mehrwertigen Carbonsäuren und fetten Ölen oder freien, natürlichen und/oder synthetischen Fettsäuren, und
(B) mindestens einen Fettsäurepolyglycerinester als Emulgator, und
(D) Hilfsstoffe für die Beschichtung von metallischen, mineralischen und/oder Kunststoffoberflächen, und gegebenenfalls
(E) ein oder mehrere anorganische oder organische Pigmente und gegebenenfalls
(F) ein oder mehrere Polymerdispersionen, hergestellt nach dem Emulsionspolymerisationsverfahren aus olefinisch ungesättigten organischen Verbindungen.

15. Wässriger Alkydharzlack nach Anspruch 14, enthaltend 0,01 Gew.-% bis 60 Gew.-% anorganische oder organische Pigmente.

16. Wässriger Alkydharzlack nach Anspruch 14 und/oder 15, enthaltend 0,1 bis 20 Gew.-% einer oder mehrerer Polymerdispersionen.
